# EUROPEAN PATENT APPLICATION

(11) **EP 4 012 900 A1**
(43) Date of publication of application: **15.06.2022**
(21) Application number: 20383068.2
(22) Date of filing: 09.12.2020
(51) Int. Cl.: H02K 9/28, H02K 11/25, H02K 7/18

(54) **COOLING IN A SLIP RING UNIT**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: Aspacher, Karl-Georg

(57) **Abstract**

A slip ring unit (20) for an electric generator (10) is provided. The slip ring unit comprises a slip ring (11) attachable to a rotor shaft (5) of the electric generator (10), a plurality of sliding contacts (12) arranged along a circumference of the slip ring (11), to provide an electrical connection with the slip ring (11),at least one temperature sensor (25) for measuring a temperature inside the slip ring unit (20), a fan (30) for providing a cooling flow in the slip ring unit (20), and a controller (31) connected to the fan (30) for controlling the cooling flow rate generated by the fan (30), the controller (31) being connected to the at least one temperature sensor (25). The controller (31) is configured in such a way that the cooling flow rate is generated depending on the temperature measured by the at least one temperature sensor (25). A wind turbine and an operating method are also provided.

## Description

### Field of invention

The present invention relates to a cooling apparatus for a slip ring unit of an electric generator. The present invention further relates to an operating method for a slip ring unit for providing a desired temperature distribution inside a slip ring unit of an electric generator. Particularly, but not exclusively, the present invention may be efficiently applied to an electric generator of a wind turbine.

### Art Background

An electric generator, such as an electric generator installed in a wind turbine, typically comprises a rotor which rotates relative to a stator. Electric generators are known, which has two different sets of windings: a stator winding and a rotor winding. A so-called Doubly Fed Induction Generator (DFIG) is for example an electric generator of such type. The rotor and stator windings may be electrically independent from one another and separately connected to the electrical equipment outside the machine, which may be for example use to transfer electrical power to a utility grid. Such electric generator may further include a slip ring, which is arranged on the rotor shaft and which permits, by means of sliding contacts, to establish an electrical connection between the rotor windings and the external electrical equipment.

In the above defined technical field, it is known to implement simple ventilation operation strategies, which typically offers an ON/OFF operation mode. If the ventilation is activated the system provides full ventilation features, whereas if deactivated the system does not offer any kind of external ventilation. This may drive the system to non-optimal temperature conditions where the wear ratio of the sliding contacts might be increased. Higher wear ratios reduce the maintenance frequency intervals, implying eventually a higher associated maintenance cost. Additionally, such a ventilation concept may imply an extra consumption of electrical supply that is not required due to the low demanding operation requirements or due to ambient temperature conditions.

Therefore, there scope of the present invention is to provide a slip ring and an operational method for a slip ring, which may overcome the drawbacks of the prior art.

### Summary of the invention

This need may be met by the subject matter according to the independent claim. Advantageous embodiments of the present invention are described by the dependent claims.

According to a first aspect of the present invention, a slip ring unit for an electric generator is provided. The slip ring unit comprises a slip ring attachable to a rotor shaft of the electric generator, a plurality of sliding contacts arranged along a circumference of the slip ring, to provide an electrical connection with the slip ring, at least one temperature sensor for measuring a temperature inside the slip ring unit, a fan for providing a cooling flow in the slip ring unit, and a controller connected to the fan for controlling the cooling flow rate generated by the fan, the controller being connected to the at least one temperature sensor. The control is configured in such a way that the cooling flow rate is generated depending on the temperature measured by the at least one temperature sensor.

An electric generator comprising the above described slip ring unit may be advantageously integrated in a wind turbine. An electric generator comprising the above described electrical connector may be a Doubly Fed Induction Generator (DFIG).

According to a further aspect of the present invention, an operating method for operating a slip ring unit for an electric generator it is provided. The slip ring unit comprises a slip ring attachable to a rotor shaft of the electric generator, and a plurality of sliding contacts arranged along a circumference of the slip ring, to provide an electrical connection with the slip ring.

The method comprises measuring a temperature inside the slip ring unit, providing a cooling flow in the slip ring unit, and controlling the cooling flow rate depending on the temperature measured by the at least one temperature sensor.

From the use of a cooling ventilation concept where the generated cooling flow rate is variable, as above described it is expected an improvement in the efficiency of the system due to the minimization of the power consumption of the motor fan. A significant cost saving in operational expenditures associated to maintenance routines is achieved. In a slip ring system the preventive maintenance cost are related to the cleaning of the system to remove the conductive dust that results from the operation of the brushes and slip rings, and that can provoke electrical failures if not cleaned properly during the maintenance intervals. The conductive dust generation depends on the ambient conditions as previously explained, these conditions are essentially humidity and temperature. The use of the above described cooling technology allows the decrease of the frequency of these preventive maintenance routines due to the optimal performance conditions that are achieved and its consequently minimization of the brushes wear ratios.

The fan controller allows the electronical control of the air flow. The generated air flow rate may be regulated through the temperature reference that is measured. The management of the fan performance is autonomous since it is based on internal components temperature measurements. There is no need of external communication, for example with the controller of the wind turbine to regulate the fan performance. An additional benefit may be the bearings electro motor in the fan are not always rotating at full speed, thus implying an overall reduction on the number of rotation cycles. This allows to extend the expected lifetime of the motor bearings, reducing the associated maintenance cost for the replacement of the motor fan.

In an example, the at least one temperature sensor may be attached to one or more holder (s) for supporting the sliding contacts. In an example, the at least one temperature sensor may be attached to other portion of the slip ring unit.

In an example, the controller may comprise an input for receiving a temperature signal from the at least one temperature sensor and an output for sending a controlling signal to the fan, the controlling signal being a function of the temperature signal. The controlling signal may be a voltage of an electric motor of the fan. The controlling signal may be proportional or linearly proportional to the temperature signal.

The function of the controlling signal may be previously set up according to the desired output values.

In an example, the operating method may further comprise measuring a rotor speed and a rotor current, calculating the thermal losses in the slip ring unit, calculating the required air flow in the slip ring unit depending on the thermal losses calculated in the previous step, calculating a plurality of temperatures in a respective plurality of points of the slip ring unit, determining at least one wear-ratio curve for the sliding contacts of the slip ring unit depending on the calculations performed in the previous step, and determining an expected lifetime of the sliding contacts by using said at least one wear-ratio curve and the temperature inside measured the slip ring unit.

The probability of system failures may be reduced due to the system temperature monitoring and the optimal performance conditions, to which the system is driven. Therefore, the cost associated to possible corrective maintenance tasks may be further minimized.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a schematic section of an electrical generator comprising a slip ring unit according to the present invention.
- Figure 2: shows an axonometric view of a component of the slip ring unit of figure 1.
- Figure 3: shows a flux diagram illustrating an operating method for the slip ring unit of figure 1.
- Figure 4: shows a graph illustrating operative steps of the method of figure 3.
- Figure 5: shows an embodiment of the operating method of figure 3.

### Detailed Description

The illustrations in the drawings are schematic. It is noted that in different figures, similar or identical elements are provided with the same reference signs.

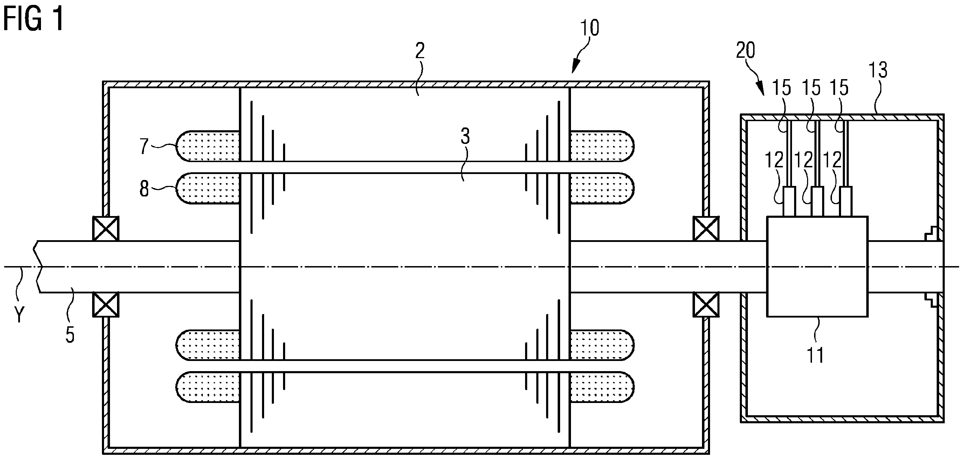

**Figure** 1 shows a simplified scheme of an electrical generator 10. The electrical generator 10 may be mechanically connected to a shaft driven by rotor blades of a wind turbine (not shown). The generator may be indirectly connected to an electrical grid by a converter and a transformer (not shown). In such example, the electrical generator 10 may convert the mechanical power coming from the rotor of the wind turbine to electrical power to be provided to the electrical grid. According to other examples (not shown), the electrical generator 10 may be not connected to a wind turbine but to any other source of primary power, different from the wind. The electrical generator 10 may comprise a rotor 3 and a stator 2. The rotor 3 may be radially internal to the stator 2 and may be coupled to a rotatable shaft 5, in order to be rotatable with respect to the stator 2 about a rotational axis Y. According to other examples (not shown), the rotor 3 may be radially external to the stator 2. The electrical generator 10 may be a Doubly Fed Induction Generator (DFIG). The rotor 3 and the stator 2 may comprise a rotor winding 8 and a stator winding 7, respectively. The rotor winding 8 and the stator winding 7 may be electrically independent and separately connected to a transformer (not shown), for transforming the electrical power provided by both the rotor winding 8 and the stator winding 7 to an electrical voltage compatible with the electrical grid. According to other examples, the electrical generator 10 may be another type of electrical generator. Between the rotor 3 and the converter a slip ring unit 20 may be provided, which may permit, by means of sliding contacts, for example brushes, to establish an electrical connection between the rotor winding 8 and other stationary electrical components. The slip ring unit 20 may comprise a slip ring 11 attached to the rotor shaft 5 and a plurality of sliding contacts 12 arranged along a circumference of the slip ring 11, to provide an electrical connection with the slip ring 11. The sliding contacts 12 may be brushes. The slip ring unit 20 may comprise one or more holders 15 for supporting the sliding contacts 12. The slip ring unit 20 may further comprise an external housing 13 for housing the slip ring 11, the sliding contacts 12 and the holders 15.

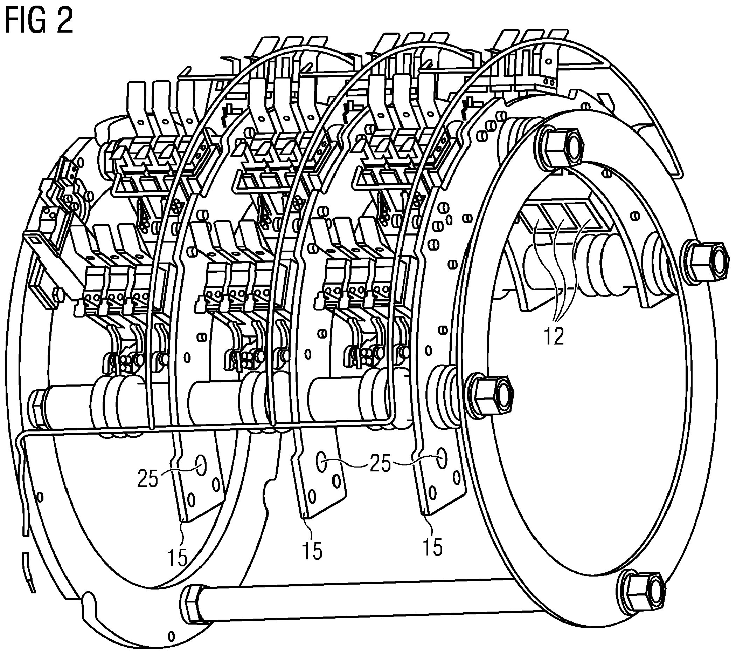

**Figure** 2 shows a plurality of sliding contacts 12 in the form of brushes distributed around the slip ring 11 (not shown in figure 2). The brushes 12 may be supported by a plurality of holders 15 (three holders 15 are shown in figure 2) in the form of arcuated plates coaxial with the rotational axis Y (see Figure 1). The holders 15 may be axially distributed and distanced along the rotational axis Y (see Figure 1). Each of the holders 15 may support a respective plurality of brushes 12 so that they may be held in contact with an external surface of the slip ring 11. The holders 15 may comprise at least one temperature sensor 25 (three temperature sensors 25, one for each holder 15, in the example of figure 2) for measuring a respective temperature inside the slip ring unit 20. The temperature sensor(s) 25 may be provided at one circumferential end of the holder 15. The temperature sensor(s) 25 may be provided in other positions in the slip ring unit 20, so that the measurement may be associated with temperature at the contact between the brushes 12 and the slip ring 11.

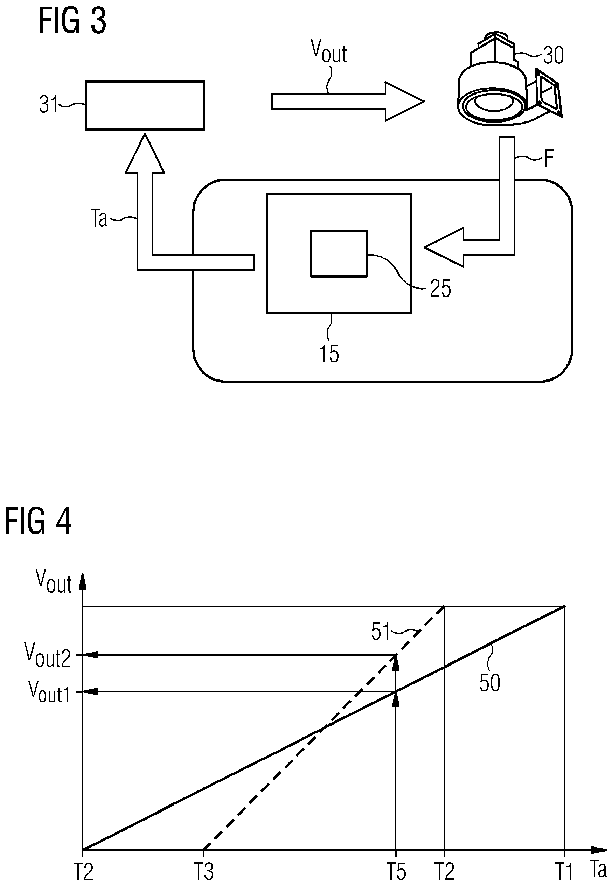

**Figure** 3 shows a block diagram illustrating how a cooling flow inside the slip ring unit 20 may be controlled. The temperature sensor may measure a temperature. The temperature sensor 25 may provide a temperature signal Ta as input to a controller 31, wherein the temperature signal may be proportional to the measured temperature. The controller 31 may be connected to a fan 30 which may provide a cooling flow F in the slip ring unit 20. According to other examples (not shown), the controller 31 may be connected to two or more fans that may provide a cooling flow F in the slip ring unit 20. The controller 31 may control the cooling flow rate generated by the fan 30 depending on the temperature measured by the at least one temperature sensor 25. The controller 31 may comprise an input for receiving the temperature signal Ta from the temperature sensor(s) 25 and an output for sending a controlling signal Vout to the fan 30. In examples comprising two or more fans, the controller 31 may send a plurality of controlling signals, i.e. one per each fan, wherein such controlling signals that may be equal or different e.g. if a plurality of sensors are used.

The controlling signal Vout may be proportional to the temperature signal Ta. In an example, the controlling signal Vout may be linearly proportional to the temperature signal Ta. The controlling signal Vout may be a voltage signal to be applied to an electric motor of the fan. By variating the controlling signal Vout the speed of the motor of the fan 30 may be changed and consequently also the rate of the cooling flow F may be changed.

**Figure** 4 shows a graph illustrating two different function 50, 51 illustrating a dependency between the controlling signal Vout and the temperature signal Ta. A first linear function 50 extends between a point at a first minimum temperature T2 and Vout=0 to another point where the temperature has a first maximum value T1 and Vout=Vmax. At Vmax the speed of the fan 30 and consequently the generated cooling flow rate reaches also a maximum value. A second linear function 51 extends between a point at a second minimum temperature T4 and Vout=0 to another point where the temperature has a second maximum value T3 and Vout=Vmax. When a temperature value T5 is measured by the temperature sensor(s) 25 and provided to the controller, a first control value Vout1 of the controlling signal Vout may be generated if the first linear function 50 is used. Alternatively, a second control value Vout2 of the controlling signal Vout may be generated if the second linear function 51 is used. According to examples, other functions assessing a dependency between the controlling signal Vout and the temperature signal Ta may be used. Such functions may be linear or not linear. The adjustable cooling flow rate permits to operate the brushes at the temperature where an optimal performance is obtained or at least close to such temperature. At such operational points wear ratio of the brushes may be reduced, thus allowing the extension of the maintenance frequency intervals.

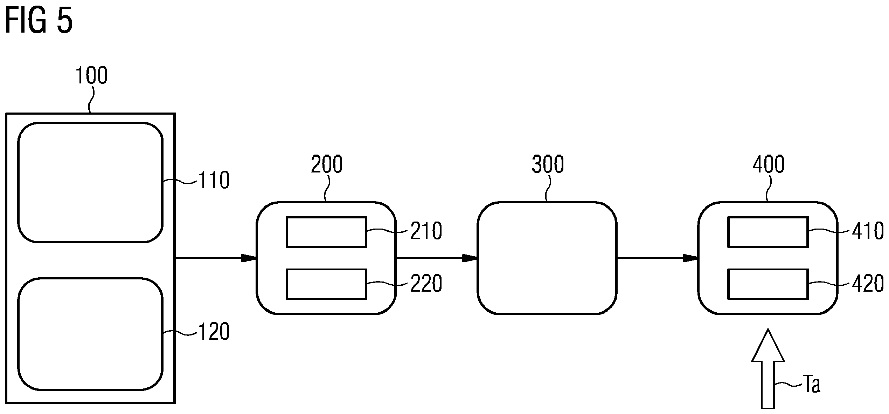

**Figure** 5 shows a block diagram illustrating a method for operating the slip ring unit 20, which may be used for determining an expected lifetime of the brushes 12. In block 100, the input data may be provided. Input data may comprise operational inputs 110 and system architecture dimensional data 120. The operational inputs 110 may comprise measured values of speed and current of the rotor 3. The system architecture dimensional data 120 may comprise geometrical information about the sliding contacts 12, the slip ring 11 and the holders 15. In block 200, the thermal losses 210 of the slip ring unit 20 may be calculated. The thermal losses 210 may comprise electrical and mechanical losses. Block 200, may further comprise calculating the required air flow 220 in the slip ring unit 20, depending on the thermal losses 210. In block 300, a plurality of temperatures may be calculated in a respective plurality of points of the slip ring unit 20. Based on system architecture dimensional data 120 and the thermal losses 210, the expected temperatures in different portions of the slip ring unit 20 may be calculated. In block 400, at least one wear-ratio curve 410 for the sliding contacts 12 may be determined. Block 400, may further comprise determining an expected lifetime 420 of the sliding contacts 12 by using the wear-ratio curve 410 and the temperature Ta measured inside the slip ring unit 20. The expected temperature distribution and the point on the wear-ratio curves depending on the contact temperature Ta may be used to determine the expected lifetime, which may further be used for defining and scheduling the maintenance tasks.

## Claims

1. A slip ring unit (20) for an electric generator (10) comprising:
- a slip ring (11) attachable to a rotor shaft (5) of the electric generator (10),
- a plurality of sliding contacts (12) arranged along a circumference of the slip ring (11), to provide an electrical connection with the slip ring (11),
- at least one temperature sensor (25) for measuring a temperature inside the slip ring unit (20),
- at least one fan (30) for providing a cooling flow (F) in the slip ring unit (20),
- a controller (31) connected to the fan (30) for controlling the cooling flow rate generated by the fan (30), the controller (31) being connected to the at least one temperature sensor (25),
wherein the controller (31) is configured in such a way that the cooling flow rate is generated depending on the temperature measured by the at least one temperature sensor (25).

2. The slip ring unit (20) according to claim 1, wherein the at least one temperature sensor (25) is attached to at least a holder (15) for supporting the sliding contacts (15).

3. The slip ring unit (20) according to claim 1 or 2, wherein the controller (31) comprises an input for receiving a temperature signal (Ta) from the at least one temperature sensor (25) and an output for sending a controlling signal (Vout) to the fan (30), the controlling signal (Vout) being a function of the temperature signal (Ta).

4. The slip ring unit (20) according to claim 3, wherein the controlling signal (Vout) is proportional to the temperature signal (Ta).

5. The slip ring unit (20) according to claim 4, wherein the controlling signal (Vout) is linearly proportional to the temperature signal (Ta).

6. The slip ring unit (20) according to any of claims 3 to 5, wherein the controlling signal (Vout) is a voltage signal.

7. An electric generator (10) comprising a rotor (3), a stator (2), a rotor shaft (5) and a slip ring unit (20) according to any of the claims 1 to 6.

8. A wind turbine (1) comprising an electric generator (10) according to claim 7.

9. An operating method for operating a slip ring unit (20) for an electric generator (10), the slip ring unit (20) comprising:
- a slip ring (11) attachable to a rotor shaft (5) of the electric generator (10),
- a plurality of sliding contacts (12) arranged along a circumference of the slip ring (11), to provide an electrical connection with the slip ring (11),
the method comprising the steps of:
- measuring a temperature (Ta) inside the slip ring unit (20),
- providing a cooling flow (F) in the slip ring unit (20), and
- controlling the cooling flow rate depending on the temperature measured by the at least one temperature sensor (25).

10. The operating method according to claim 9, wherein the cooling flow rate is proportional to the temperature signal (Ta) .

11. The operating method according to claim 10, wherein the cooling flow rate is linearly proportional to the temperature signal (Ta).

12. The operating method according to any of claims 9 to 11, wherein the method comprises the further step of:
- measuring (100) a rotor speed and a rotor current,
- calculating (200) the thermal losses (210) in the slip ring unit (20),
- calculating (200) the required air flow (220) in the slip ring unit (20) depending on the thermal losses,
- calculating (300) a plurality of temperatures in a respective plurality of points of the slip ring unit (20),
- determining (400) at least one wear-ratio curve (410) for the sliding contacts (12) of the slip ring unit (20) depending on the calculations performed in the previous step,
- determining (400) an expected lifetime (420) of the sliding contacts (12) by using said at least one wear-ratio curve and the temperature (Ta) measured inside the slip ring unit (20).
